# FASCICULE DE BREVET EUROPEEN

(11) **EP 1 535 788 B1**
(45) Date de publication et mention de la délivrance du brevet: **18.07.2007**
(21) Numéro de dépôt: 04292751.7
(22) Date de dépôt: 22.11.2004
(51) Int. Cl.: B60K 37/00, B60H 1/00

(54) **Planche de bord pour véhicules automobiles**
Armaturenbrett für Kraftfahrzeuge
Dashboard for motor vehicles

(30) Priorité: 25.11.2003 FR 0313830
(43) Date de publication de la demande: 01.06.2005
(73) Titulaire: Peugeot Citroën Automobiles S.A., 78140 Vélizy Villacoublay (FR)
(72) Inventeur: Auffray, Bertrand, 78330 Fontenay-le-Fleury (FR); Auger, Jean-Marc, 92350 Le Plessis Robinson (FR); Duvivier, Arnaud, 93800 Epinay sur Seine (FR); de Guillebon, Henri, 92500 Rueil Malmaison (FR)
(74) Mandataire: Lanceplaine, Jean-Claude

(56) Documents cités:
- FR-A- 2 814 987
- US-A- 4 150 732
- US-A- 5 709 601
- US-A- 5 869 792
- PATENT ABSTRACTS OF JAPAN vol. 2002, no. 12, 12 décembre 2002 (2002-12-12) & JP 2002 240534 A (INOAC CORP), 28 août 2002 (2002-08-28)

## Description

La présente invention concerne une planche de bord pour véhicules automobiles.

Dans les véhicules automobiles, la planche de bord est placée dans un habitacle à proximité du compartiment moteur et à l'extrémité inférieure d'un pare-brise. La planche de bord est généralement constituée par une structure support comportant un panneau supérieur recouvert d'une garniture et destiné à supporter des sous-ensembles préassemblés.

Le panneau supérieur ainsi que la garniture comportent des ouies de soufflage d'air à l'intérieur de l'habitacle du véhicule et également une buse de dégivrage du pare-brise s'étendant parallèlement à l'extrémité inférieure de ce pare-brise. Cette buse de dégivrage est reliée par un canal d'alimentation à des moyens de ventilation, comme par exemple un ventilateur.

Or, des planches de bord des véhicules automobiles doivent répondre à des critères de conception de plus en plus sévères aussi bien d'un point de vue vibratoire qu'il faut satisfaire, tout en étant le plus léger possible, que d'un point de vue de réduction des bruits émis par le système de ventilation.

En effet, le bruit émis par le système de ventilation est important lorsqu'il se trouve en position de dégivrage du fait du fort débit d'air dans cette position et également du fait de la forme complexe du canal d'alimentation d'air et aussi de la buse de dégivrage.

On connaît dans le document US-A-5 709 601, une planche de bord pour véhicules automobiles, du type comprenant une structure support comportant un panneau supérieur disposé à l'extrémité inférieure d'un pare-brise et recouvert d'une garniture, ledit panneau et ladite garniture étant munis d'ouies de soufflage d'air à l'intérieur de l'habitacle et d'une buse de dégivrage du pare-brise s'étendant parallèlement à l'extrémité inférieure de ce pare-brise et reliée par un canal d'alimentation à des moyens de ventilation

Mais, dans ce type de planche de bord, le bruit généré dans les conduits d'air est important.

L'invention a pour but de proposer une planche de bord qui permet de réduire le bruit émis par le système de ventilation en position de dégivrage et également par la buse de dégivrage, tout en satisfaisant aux critères de rigidité nécessaires pour éviter les problèmes de vibration.

L'invention a donc pour objet une planche de bord pour véhicules automobiles, du type comprenant une structure support comportant un panneau supérieur disposé à l'extrémité inférieure d'un pare-brise et recouvert d'une garniture, ledit panneau et ladite garniture étant munis d'ouies de soufflage d'air à l'intérieur de l'habitacle et d'une buse de dégivrage du pare-brise s'étendant parallèlement à l'extrémité inférieure de ce pare-brise et reliée par un canal d'alimentation à des moyens de ventilation et la structure support comprenant, au-dessous du panneau supérieur, au moins une cavité interne reliée par au moins un conduit de communication audit canal pour former au moins un résonateur acoustique et réduire l'émission de bruit de la buse de dégivrage, caractérisée en ce que ladite cavité présente une section transversale en forme de quadrilatère et comporte une première partie sensiblement en forme de "L" constituant une nervure de rigidification venue de matière avec le panneau supérieur et une seconde partie sensiblement en forme de "L" inversé complémentaire à la première partie et fixée au-dessous dudit panneau supérieur, ladite seconde partie comportant ledit conduit de communication avec le canal.

Selon d'autres caractéristiques de l'invention :
- ladite cavité s'étend parallèlement à la buse de dégivrage,
- ladite cavité est formée par une nervure de rigidification du panneau supérieur,
- la nervure de rigidification est venue de matière avec le panneau supérieur,
- ladite cavité est séparée par au moins une cloison transversale verticale en au moins deux compartiments indépendants reliés chacun par au moins un conduit de communication audit canal,
- le ou les conduits de communication comportent une plaque microperforée verticale s'étendant perpendiculairement au sens d'écoulement de l'air,
- ladite cavité comporte une plaque microperforée verticale s'étendant parallèlement à la paroi avant de cette cavité,
- la plaque microperforée est appliquée contre la paroi avant,
- la plaque microperforée est à une distance de la paroi avant comprise entre 5 et 95% de la largeur de la cavité et de préférence entre 5 et 50% de ladite largeur,
- le taux de microperforations de la plaque est inférieur à 5% de la surface de ladite plaque,
- la plaque microperforée est constituée par un matériau poreux.

L'invention sera mieux comprise à la lecture de la description qui va suivre, donnée à titre d'exemple et faite en se référant aux dessins annexés, sur lesquels:
- la Fig. 1 est une vue schématique en perspective d'une planche de bord conforme à l'invention,
- la Fig. 2 est une vue schématique en perspective d'une structure support de planche de bord non couverte par les revendications,
- la Fig. 3 est une vue en coupe transversale de la planche de bord de la Fig. 2,
- la Fig. 4 est une vue schématique en perspective d'une structure support de la planche de bord non couverte par les revendications,
- la Fig. 5 est une vue schématique en perspective d'un tronçon d'un résonateur acoustique de la planche de bord, selon l'invention,
- les Figs. 6 et 7 sont deux vues schématiques en perspective de deux variantes d'un résonateur acoustique de la planche de bord.

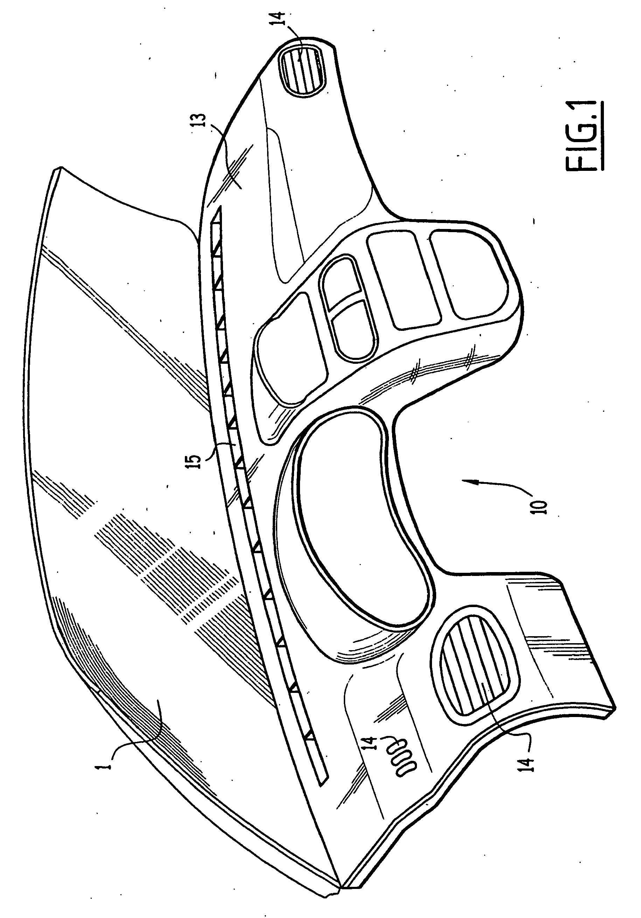

Sur les Figs. 1 à 3, on a représenté schématiquement une planche de bord désignée par la référence générale 10 destinée à être placée dans un habitacle d'un véhicule automobile à proximité d'un compartiment moteur et à l'extrémité inférieure d'un pare-brise 1.

De manière classique, la planche de bord 1 comporte une structure support désignée dans son ensemble par la référence 11 et qui est destinée à supporter divers sous-ensembles préassemblés, non représentés, et cette structure support 11 comporte un panneau supérieur 12 qui est recouvert d'une garniture 13.

Le panneau supérieur 12 et la garniture 13 comportent des ouies 14 de soufflage d'air à l'intérieur de l'habitacle du véhicule et également une buse 15 de dégivrage du pare-brise qui s'étend parallèlement à l'extrémité inférieure de ce pare-brise 1. La buse de dégivrage 15 est reliée par un canal d'alimentation 16 à des moyens de ventilation, comme par exemple un ventilateur, non représenté.

La structure support 11 comprend au-dessous du panneau supérieur 12 au moins une cavité interne 20 reliée au canal 16 par au moins un conduit de communication 21 pour former au moins un résonateur acoustique et réduire l'émission de bruit de la buse de dégivrage 15.

En effet, la position de dégivrage est une des positions qui génère le plus de bruit du fait des forts débits et de la forme complexe du canal 16 et de cette buse de dégivrage 15.

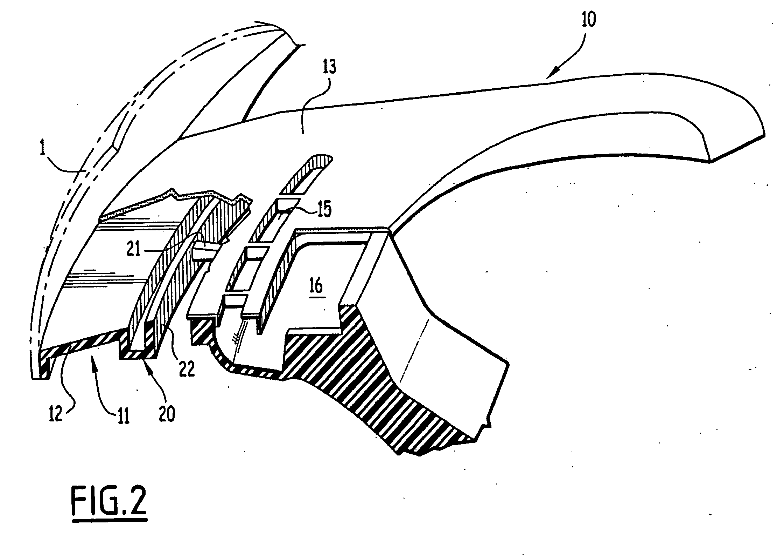

Ainsi que montré plus particulièrement à la Fig. 2, la cavité 20 s'étend parallèlement à la buse de dégivrage 15.

De préférence, la cavité 20 est formée par une nervure de rigidification 22 du panneau supérieur 12 de la planche de bord 10. La nervure 22 est située à proximité de la buse de dégivrage 15 et par conséquent du canal d'alimentation 16 et elle joue le rôle de renfort mécanique nécessaire pour la tenue en vibration de la planche de bord 10.

La nervure 22 est venue de matière avec le panneau supérieur 12 et cet ensemble réalisé en matière plastique est mis en forme au cours d'une même opération. Ainsi, la nervure 22 assure la rigidification du panneau supérieur 12 de la planche de bord 10 et permet du fait de la cavité 20, également de réduire la propagation du son autour de certaines fréquences caractéristiques.

La nervure 22 peut aussi être constituée par une pièce indépendante au panneau supérieur 12 et peut être assemblée avec ce dernier par collage ou par soudure plastique.

La Fig. 2 représente une cavité 20 constituant un résonateur acoustique formée par une seule cavité s'étendant parallèlement à la buse de dégivrage 15 et reliée par un conduit de communication 21 au canal 16.

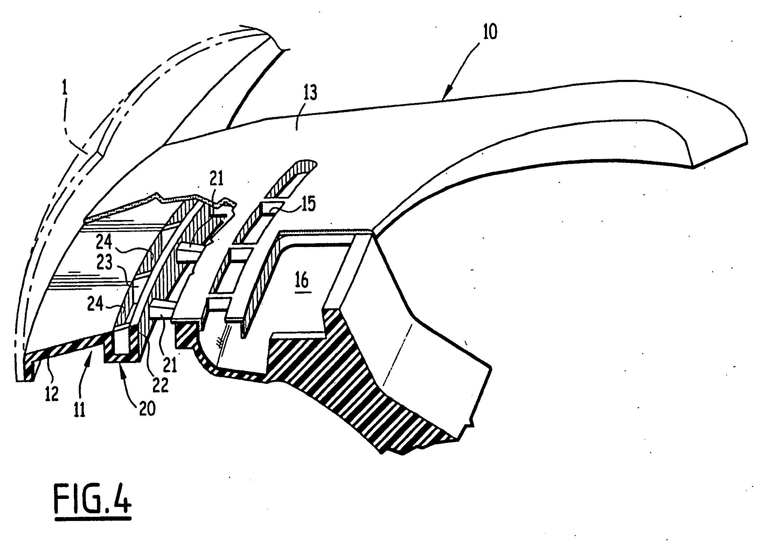

La Fig. 4 représente une cavité 20 séparée par plusieurs cloisons transversales 23 en plusieurs compartiments indépendants 24 reliés chacun par un conduit de communication 21 au canal 16. Ces cloisons transversales 23 permettent d'augmenter la rigidité du panneau supérieur 12 de la planche de bord 10.

La cavité 20 présente généralement une section transversale en forme de quadrilatère. La cavité 20 peut également présentée tout autre forme, comme par exemple une forme circulaire.

Selon l'invention elle est constituée de deux parties, respectivement une première partie 25 et une seconde partie 26.

La première partie 25 a sensiblement la forme d'un "L" qui constitue une nervure de rigidification venue de matière avec le panneau supérieur 12 de la structure support 11, tandis que la seconde partie 26 a sensiblement la forme d'un "L" inversé complémentaire à la première partie 25 de façon à former le volume interne de la cavité 20.

La seconde partie 26 est fixée au-dessous du panneau supérieur 12 et le conduit de communication 21 est ménagé dans cette seconde partie 26. Dans ce cas également, la cavité 20 peut être divisée par plusieurs cloisons transversales 23 en plusieurs compartiments indépendants 24 reliés chacun par un conduit de communication 21 au canal 16. La seconde partie 26 peut être réalisée en matière plastique par moulage.

La seconde partie 26 peut être assemblée avec le panneau supérieur 12 par collage ou soudage plastique et la première partie 25 avec la seconde partie 26 également par collage ou par soudage plastique.

Le ou les conduits de communication 21 peuvent comporter une plaque 27 microperforée verticale s'étendant perpendiculairement au sens d'écoulement de l'air dans ledit conduit 21, ainsi que montré à la Fig. 6.

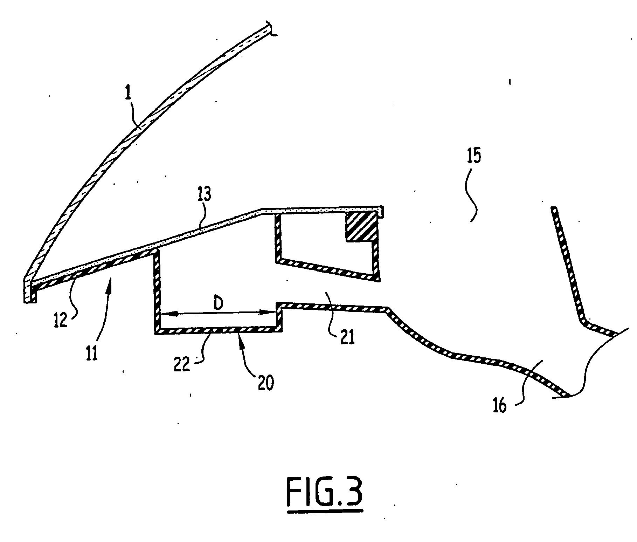

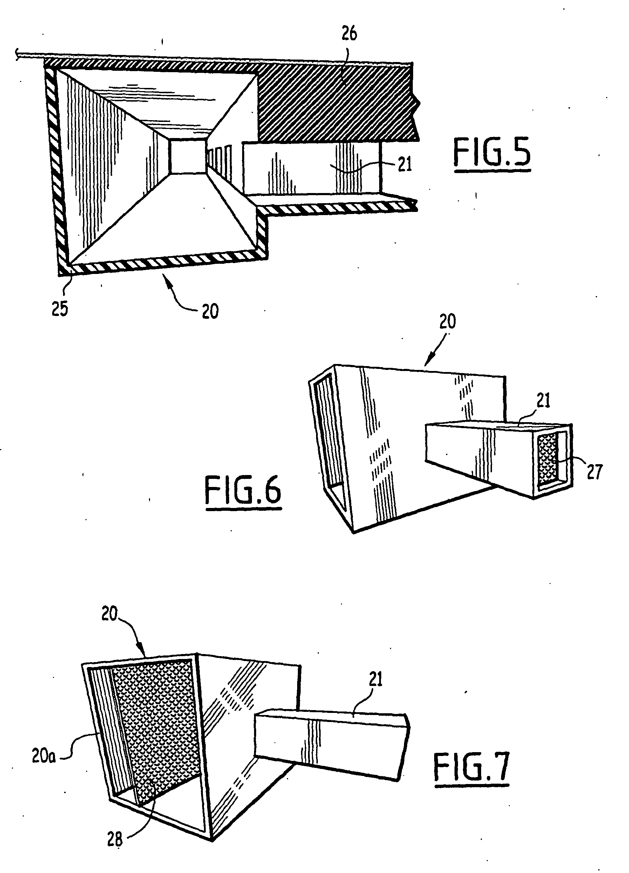

Selon une autre variante, la cavité 20 peut comporter une plaque microperforée 28 s'étendant parallèlement à la paroi avant 20a de la cavité 20, ainsi que montré à la Fig. 7. La plaque microperforée 28 est soit appliquée contre cette paroi avant 20a, soit disposée à une distance comprise entre 5 et 95% de la largeur "D" de la cavité 20 (Fig. 3) et de préférence entre 5 et 50% de ladite largeur. Selon un mode de réalisation préférentiel, la plaque microperforée 28 est à distance égale à 2cm de ladite paroi avant.

Le taux de microperforations de la plaque 27 ou 28 est inférieur à 5% de la surface totale de ladite plaque. La plaque microperforée 27 ou 28 est constituée par exemple par un matériau poreux.

La planche de bord selon l'invention permet d'utiliser le volume d'une nervure de rigidification de la structure de support de cette planche de bord pour former un volume interne relié au canal d'alimentation de la buse de dégivrage afin de réaliser au moins un résonateur acoustique permettant ainsi de réduire la propagation du son autour de certaines fréquences caractéristiques.

Le dimensionnement du volume fermé ainsi formé par la cavité 20 est réalisé en prenant en compte des contraintes mécaniques ainsi que des contraintes acoustiques. De même, la taille du ou des conduits de communication 21 est dimensionnée selon les contraintes acoustiques en liaison avec le volume interne de la cavité 20. La combinaison de plusieurs compartiments internes dans la cavité 20 et de plusieurs conduits de communication 21 permet d'obtenir des effets de réduction du bruit autour de plusieurs fréquences caractéristiques. Ainsi en adaptant les dimensions des compartiments indépendants et des conduits de communication, chaque résonateur acoustique ainsi réalisé intervient autour de fréquences caractéristiques, leur combinaison permettant une optimisation du comportement acoustique de la planche de bord sur une plus grande plage de fréquences.

## Revendications

1. Planche de bord pour véhicules automobiles, du type comprenant une structure support (11) comportant un panneau supérieur (12) disposé à l'extrémité inférieure d'un pare-brise (1) et recouvert d'une garniture (13), ledit panneau (12) et ladite garniture (13) étant munis d'ouies de soufflage (14) d'air à l'intérieur de l'habitacle et d'une buse de dégivrage (15) du pare-brise (1) s'étendant parallèlement à l'extrémité inférieure de ce pare-brise (1) et reliée par un canal d'alimentation (16) à des moyens de ventilation et la structure support (11) comportant, au-dessous du panneau supérieur (12), au moins une cavité interne (20) reliée par au moins un conduit de communication (21) audit canal (16) pour former au moins un résonateur acoustique et réduire l'émission de bruit de la buse de dégivrage (15), **caractérisée en ce que** ladite cavité (20) présente une section transversale en forme de quadrilatère qui comporte une première partie (25) sensiblement en forme de "L" constituant une nervure de rigidification venue de matière avec le panneau supérieur (12) et une seconde partie (26) sensiblement en forme de "L" inversé complémentaire à la première partie (25) et fixée au-dessous dudit panneau supérieur (12), ladite seconde partie (26) comportant ledit conduit (21) de communication avec le canal (16).

2. Planche de bord selon la revendication 1, **caractérisée en ce que** ladite cavité (20) s'étend parallèlement à la buse de dégivrage (15).

3. Planche de bord selon l'une quelconque des revendications 1 à 2, **caractérisée en ce que** ladite cavité (20) est séparée par au moins une cloison transversale (23) verticale en au moins deux compartiments indépendants (24) reliés chacun par un conduit (21) de communication avec ledit canal (16).

4. Planche de bord selon la revendication 3, **caractérisée en ce que** le ou les conduits (21) de communication comportent une plaque microperforée (27) verticale s'étendant perpendiculairement au sens d'écoulement de l'air.

5. Planche de bord selon l'une quelconque des revendications 1 à 4, **caractérisée en ce que** ladite cavité (20) comporte une plaque microperforée (28) verticale s'étendant parallèlement à la paroi avant (20a) de cette cavité (20).

6. Planche de bord selon la revendication 5, **caractérisée en ce que** la plaque microperforée (28) est appliquée contre ladite paroi avant (20a).

7. Planche de bord selon la revendication 5, **caractérisée en ce que** la plaque microperforée (28) est à une distance de ladite paroi avant (20a) comprise entre 5 et 95% de la largeur de la cavité (20) et de préférence comprise entre 5 et 50% de ladite largeur.

8. Planche de bord selon l'une quelconque des revendications 4 à 7 **caractérisée en ce que** le taux de microperforations de la plaque (27, 28) est inférieur à 5% de la surface de ladite plaque.

9. Planche de bord selon l'une quelconque des revendications 4 à 7, **caractérisée en ce que** la plaque microperforée (27, 28) est constituée par un matériau poreux.

## Claims

1. Dashboard for motor vehicles, of the type having a support structure (11) comprising an upper panel (12) which is arranged at the bottom end of a windscreen (1) and which is covered by a facing (13), said panel (12) and said facing (13) being provided with louvres (14) for blowing air into the interior of the compartment and with a vent (15) for deicing of the windscreen (1), which vent (15) extends parallel to the bottom end of that windscreen (1) and is connected, by way of an inlet channel (16), to air supply means, and the support structure (11) containing, beneath the upper panel (12), at least one internal cavity (20) connected by way of at least one communicating duct (21) to said channel (16) so as to form at least one acoustic resonator and to reduce the emission of noise from the deicer vent (15), **characterised in that** said cavity (20) has a cross-section in the shape of a quadrilateral comprising a first part (25), substantially in the shape of an "L", constituting a stiffening rib integrally formed with the upper panel (12) and a second part (26), substantially in the shape of an inverted "L", complementary to the first part (25) and fixed beneath said upper panel (12), said second part (26) including said communicating duct (21) to the channel (16).

2. Dashboard according to claim 1, **characterised in that** said cavity (20) extends parallel to the deicer vent (15).

3. Dashboard according to any one of claims 1 to 2, **characterised in that** said cavity (20) is separated, by means of at least one vertical transverse divider (23), into at least two independent compartments (24) each connected by way of a communicating duct (21) to said channel (16).

4. Dashboard according to claim 3, **characterised in that** the communicating duct(s) (21) contain(s) a microperforated vertical plate (27) extending perpendicular to the direction of air flow.

5. Dashboard according to any one of claims 1 to 4, **characterised in that** said cavity (20) contains a microperforated vertical plate (28) extending parallel to the front wall (20a) of that cavity (20).

6. Dashboard according to claim 5, **characterised in that** the microperforated plate (28) abuts said front wall (20a).

7. Dashboard according to claim 5, **characterised in that** the microperforated plate (28) is at a spacing from said front wall (20a) of between 5 and 95 %, inclusive, of the width of the cavity (20) and preferably of between 5 and 50 %, inclusive, of said width.

8. Dashboard according to any one of claims 4 to 7, **characterised in that** the extent to which the plate (27, 28) is microperforated is less than 5 % of the surface area of said plate.

9. Dashboard according to any one of claims 4 to 7, **characterised in that** the microperforated plate (27, 28) is made of a porous material.

## Patentansprüche

1. Armaturenbrett für Kraftfahrzeuge des Typs, der eine Unterstützungsstruktur (11) mit einer am unteren Ende einer Windschutzscheibe (1) angeordneten oberen Platte (12), die mit einem Überzug (13) abgedeckt ist, umfasst, wobei die Platte (12) und der Überzug (13) mit Schlitzen (14) zum Ausblasen von Luft in das Innere des Fahrgastraums und mit einer Entfrostungsdüse (15) für die Windschutzscheibe (1), die sich parallel zum unteren Ende dieser Windschutzscheibe (1) erstreckt und durch einen Versorgungskanal (16) mit Belüftungsmitteln verbunden ist, versehen sind und wobei die Unterstützungsstruktur (11) unter der oberen Platte (12) wenigstens einen inneren Hohlraum (20) aufweist, der mit wenigstens einer Leitung (21) für die Verbindung mit dem Kanal (16) verbunden ist, um wenigstens einen Schallresonator zu bilden und um die Geräuschemission der Entfrostungsdüse (15) zu verringern, **dadurch gekennzeichnet, dass** der Hohlraum (20) einen transversalen Querschnitt mit viereckiger Form aufweist, der einen ersten Teil (25) im Wesentlichen in Form eines "L", der eine einteilig mit der oberen Platte (12) ausgebildete Versteifungsrippe bildet, und einen zweiten Teil (26) im Wesentlichen in Form eines umgedrehten "L", der zu dem ersten Teil (25) komplementär ist und unter der oberen Platte (12) befestigt ist, umfasst, wobei der zweite Teil (26) die Leitung (21) für die Verbindung mit dem Kanal (16) umfasst.

2. Armaturenbrett nach Anspruch 1, **dadurch gekennzeichnet, dass** sich der Hohlraum (20) parallel zu der Entfrostungsdüse (15) erstreckt.

3. Armaturenbrett nach einem der Ansprüche 1 bis 2, **dadurch gekennzeichnet, dass** der Hohlraum (20) durch wenigstens eine vertikale transversale Trennwand (23) in wenigstens zwei unabhängige Räume (24) unterteilt ist, die jeweils mit einer Leitung (21) für die Verbindung mit dem Kanal (16) verbunden sind.

4. Armaturenbrett nach Anspruch 3, **dadurch gekennzeichnet, dass** die Leitung(en) (21) für die Verbindung eine vertikale mikroperforierte Platte (27) umfasst (umfassen), die sich senkrecht zur Strömungsrichtung der Luft erstreckt.

5. Armaturenbrett nach einem der Ansprüche 1 bis 4, **dadurch gekennzeichnet, dass** der Hohlraum (20) eine vertikale mikroperforierte Platte (28) umfasst, die sich parallel zur vorderen Wand (20a) dieses Hohlraums (20) erstreckt.

6. Armaturenbrett nach Anspruch 5, **dadurch gekennzeichnet, dass** die mikroperforierte Platte (28) auf die vordere Wand (20a) aufgebracht ist.

7. Armaturenbrett nach Anspruch 5, **dadurch gekennzeichnet, dass** sich die mikroperforierte Platte (28) in einem Abstand von der vorderen Wand (20a) befindet, der im Bereich von 5 bis 95 % der Breite des Hohlraums (20) und vorzugsweise im Bereich von 5 bis 50 % dieser Breite liegt.

8. Armaturenbrett nach einem der Ansprüche 4 bis 7, **dadurch gekennzeichnet, dass** der Anteil der Mikroperforationen der Platte (27, 28) kleiner als 5 % der Fläche der Platte ausmacht.

9. Armaturenbrett nach einem der Ansprüche 4 bis 7, **dadurch gekennzeichnet, dass** die mikroperforierte Platte (27, 28) durch ein poröses Material gebildet ist.
